# EUROPÄISCHE PATENTANMELDUNG

(11) **EP 1 133 173 A2**
(43) Veröffentlichungstag der Anmeldung: **12.09.2001**
(21) Anmeldenummer: 00125332.7
(22) Anmeldetag: 30.11.2000
(51) Int. Cl.: H04N 5/445

(54) **Videosignalverarbeitungssystem bzw. Videosignalverarbeitungsverfahren**

(30) Priorität: 23.12.1999 DE 19962730
(71) Anmelder: XSYS Interactive Research GmbH, 78050 Villingen-Schwenningen (DE)
(72) Erfinder: Vogel, Jürgen, 78086 Brigachtal (DE); Sagcob, Thomas, 78166 Donaueschingen (DE); Mauthe, Gerd, 78595 Hausen o.V. (DE); Maier, Michael, 78054 VS-Schwenningen (DE); Huber, Günther, 78073 Bad Dürrheim (DE); Bühler, Karl, 78073 Bad Dürrheim (DE); Broghammer, Bernhard, 78144 Tennenbronn (DE)
(74) Vertreter: Patentanwälte Westphal, Mussgnug & Partner

(57) **Zusammenfassung**

Videosignalverarbeitungssystem zu einer Verarbeitung von Videodaten und Grafikdaten mit
a) einem Grafiksignaleingang D_{µP}, dem die Grafikdaten zugeführt werden,
b) einem Videosignaleinang (V_{In}), dem Videobilder mit einer vorgegebenen Anzahl von Spalten und einer vorgegebenen Anzahl von Zeilen in Form von seriellen Videodaten zugeführt werden,
c) mit einem Videosignalausgang (Vₒᵤₜ),
d) einer Filtereinheit, die mit dem Videosignaleingang (V_{In}) verbunden ist und die einen Horizontalfilter (11) und einen vertikalen Filter (12) aufweist, die geeignet sind, die über den Videosignaleingang (V_{In}) erhaltenen Videodaten in Videobilder mit anderer Spalten und/oder Zeilenzahl umzuwandeln und einen ersten Speicher (17), der geeignet ist, einzelne Bildpunkte und/oder Zeilen zu puffern,
e) einem zweiten Speicher (13), der mit dem Grafiksignaleingang (D_{µP}) und der Filtereinheit (11, 12) verbunden ist, und der geeignet ist, die über den Grafiksignaleingang D_{µP} und über die Filtereinheit (11, 12) zugeführten Daten zwischen-zuspeichern,
f) einem dritten Speicher (16), der mit dem zweiten Speicher (13) verbunden ist und der geeignet ist, die über den zweiten Speicher (13) zugeführten Daten zu speichern,
g) einer Überblendungseinheit (15), die mit dem zweiten Speicher (13) und mit dem Videosignalausgang (Vₒᵤₜ) verbunden ist und die geeignet ist, die über den zweiten Speicher (13) zugeführten Grafikdaten und gefilterten Videodaten zu kombinieren, daß am Videosignalausgang (Vₒᵤₜ) serielle Videodaten vorliegen, die sich als Überlagerung der zugeführten Grafikdaten und der gefilterten Videodaten ergeben.

## Beschreibung

Die Erfindung betrifft ein Videosignalverarbeitungssystem bzw. ein Videosignalverarbeitungsverfahren zu einer Verarbeitung von Videodaten und Grafikdaten.

Aus dem Stand der Technik sind Videosignalverarbeitungssysteme bekannt, welche eine Filtereinheit zur Konvertierung von Videobildern, welche beispielsweise nach der digitalen Studionorm der Internationalen Fernmeldeunion UIT-R (bzw. des Comité Consultatif International des Radiocommunications: CCIR) 601 kodiert, sind in ein anderes Format aufweisen. Als ein Beispiel ist eine Konvertierung von einem PAL 16x9 Bildformat mit 720 Bildpunkten pro Zeile (BP/Z) und 576 Zeilen (Z) in ein nach dem Erfinder-Gremium National Television System Committee benanntes NTSC 16x9 Bildformat mit 480 BP/Z und 480 Z.

Weiterhin sind aus dem Stand der Technik Videosignalverarbeitungssysteme mit einer Recheneinheit zur Überblendung von Video- und Grafikbildern (Layering und Alpha-Blending) bekannt. Mit einer solchen Einheit können verschiedene Bilder über einstellbare Faktoren gewichtet werden (Alpha-Blending), sodaß durch Kombination bzw. Überlagerung der Bilder (Layering) die Darstellung transparenter Bilder möglich wird. So können beispielsweise durchsichtige Buttons eingeblendet werden, während das originale Videobild im Hintergrund weiterhin zu sehen ist.

Solche Systeme liegen derzeit nur als Einzelkomponenten vor. Der Nachteil der Kombination solcher Systeme liegt darin, daß der Speicherbedarf, der zur Filterung als auch zur Überblendung von Video- und Grafikbildern nötig ist, nicht optimiert ist.

Der Erfindung liegt somit die Aufgabe zugrunde, die Kombination einer Filtereinheit zur Konvertierung von Videobildern in ein anderes Format mit einer Recheneinheit zur Überlagerung mehrerer Bilder in einer gemeinsamen Hardwarestruktur zu realisieren. Die Kombination dieser Einheiten soll desweiteren derart erfolgen, daß der Speicherbedarf minimiert wird.

Diese Aufgabe wird erfindungsgemäß gelöst durch ein Videosignalverarbeitungssystem bzw. ein Videosignalverarbeitungsverfahren mit den Merkmalen der Ansprüche 1, 9, 17 und/ oder 18.

Vorteilhafte Ausführungen und Weiterbildungen der Erfindung sind in den Unteransprüchen angegeben.

Ein solches Videosignalverarbeitungssystem zu einer Verarbeitung von Videodaten und Grafikdaten, im Folgenden als Anordnung 1 bezeichnet, weist einen Grafiksignaleingang auf, dem die Grafikdaten zugeführt werden, einen Videosignaleingang, dem Videobilder mit einer vorgegebenen Anzahl von Spalten und einer vorgegebenen Anzahl von Zeilen in Form von seriellen Videodaten zugeführt werden. Weiterhin weist er einen Videosignalausgang auf, an dem die verarbeiteten Videosignale abgegriffen werden. Das Videosignalverarbeitungssystem weist weiterhin eine Filtereinheit auf, die mit dem Videosignaleingang verbunden ist und die wiederum einen Horizontalfilter und einen Vertikalfilter aufweist, die geeignet sind, die über den Videosignaleingang erhaltenen Videodaten in Videobilder mit anderer Spalten- und/oder Zeilenzahl umzuwandeln und einen ersten Speicher, der geeignet ist, einzelne Pixel und/oder Zeilen zu puffern. Das System weist weiterhin einen zweiten Speicher auf, der mit dem Grafiksignaleingang und der Filtereinheit verbunden ist und der geeignet ist, die über den Grafiksignaleingang und über die Filtereinheit zugeführten Daten zwischenzuspeichern. Ein dritter Speicher, der mit dem zweiten Speicher verbunden ist, ist geeignet, die über den zweiten Speicher zugeführten Daten zu speichern. In einer Überblendungseinheit, die mit dem zweiten Speicher und dem Videosignalausgang verbunden ist, ist geeignet, die über den zweiten Speicher zugeführten Grafikdaten und gefilterten Videodaten derart zu kombinieren, daß am Videosignalausgang serielle Videodaten vorliegen, die sich als Überlagerung der zugeführten Grafikdaten und der gefilterten Videodaten ergeben.

Ein solches System läßt sich beispielsweise sehr einfach mit Hilfe eines programmierbaren Logikbausteins und zusätzlichen Speichereinheiten sehr kostengünstig realisieren. Bei einem solchen Aufbau ist der Speicherbedarf sehr gering. Günstigerweise sind der erste und der dritte Speicher als externe Arbeitsspeicher, wie z. B. als Random Access Memories (RAMs) ausgebildet, während der zweite Speicher aufgrund geringerer Zugriffszeit als schneller Zwischenspeicher, d. h. zum Beispiel als Cache, ausgebildet ist.

Die Erfindung sieht weiterhin vor, daß die dem Grafiksignaleingang zugeführten Grafikdaten z. Bsp. Bitmaps sind, welche von einem Mikroprozessor geliefert werden. Auf diese Weise können z. Bsp. durchsichtige Buttons eingeblendet werden, während das originale Videobild im Hintergrund weiterhin zu sehen ist.

Die Erfindung sieht weiterhin vor, daß die Filtereinheit, die Speicher und die Überblendungseinheit mit einem Kontrollsystem verbunden sind, das geeignet ist, den Datenfluß bei der Video- und Grafiksignalverarbeitung zu regeln. Diese Steuerung kann beispielsweise der programmierbare Logikbaustein selbst übernehmen. Ein solcher programmierbarer Logikbaustein kann beispielsweise ein sog. Field Programmable Gate Array (FPGA) sein. In diesem Fall sieht die Erfindung vor, daß sich die Filter und Recheneinheiten, sowie der Cache innerhalb des FPGA befinden. Lediglich die RAMs sind als externe Bausteine angeschlossen.

Die Erfindung sieht weiterhin vor, daß das Kontrollsystem ein Mikroprozessor ist, oder daß die Kontrolleinheit Befehle von einem externen Mikroprozessor erhält.

Die Erfindung sieht in einer besonders vorteilhaften Ausführung vor, daß das Videosignalverarbeitungssystem in Echtzeit betrieben wird, wobei die Taktfrequenz des Kontrollsystems höher ist als die Taktfrequenz eines Signals am Videosignaleingang und/oder am Videosignalausgang. Auf diese Weise wird eine zuverlässige Signalverarbeitung gewährleistet.

Bei einem besonders vorteilhaften Signalverarbeitungssystem zu einer Verarbeitung von Videodaten und Grafikdaten ist das Vertikalfilter nicht mehr am Eingang im Filterblock implementiert, sondern am Ausgang im sog. Layering-Block. Dadurch entfällt ein zusätzlicher Speicher beim Filterblock am Signal-/Videosignaleingang, weil der zusätzlich vorhandene Speicher mitbenutzt werden kann.

Ein solches System, im Folgenden als Anordnung 2 bezeichnet, ist wie folgt aufgebaut:

Es besteht aus einem Grafiksignaleingang, dem Grafikdaten zugeführt werden, einem Videosignaleingang, dem Videobilder mit einer vorgegebenen Anzahl von Spalten und einer vorgegebenen Anzahl von Zeilen in Form von seriellen Videodaten zugeführt werden und einem Videosignalausgang. Es weist einen Horizontalfilter auf, der mit dem Videosignaleingang verbunden ist und der geeignet ist, die über den Videosignaleingang erhaltenen Videodaten in Videobilder mit einer anderen Spaltenzahl umzuwandeln. Weiterhin weist es einen Speicher auf, der mit dem Grafiksignaleingang und dem Horizontalfilter verbunden ist und der geeignet ist, die über den Grafiksignaleingang und den Horizontalfilter zugeführten Daten zwischenzuspeichern. Weiterhin ist ein Speicher vorgesehen, der mit dem anderen Speicher verbunden ist und der geeignet ist, die über die anderen Speicher zugeführten Daten zu speichern. Außerdem ist eine Überblend- und Filtereinheit vorgesehen, die mit dem ersten Speicher und dem Videosignalausgang verbunden ist, wobei die Überblend- und Filtereinheit einen Vertikalfilter aufweist, der geeignet ist, die über den ersten Speicher zugeführten Videodaten in Videobilder mit anderer Zeilenzahl umzuwandeln und eine Überblendungseinheit, die geeignet ist, die über den ersten Speicher zugeführten Grafikdaten und die gefilterten Videodaten zu kombinieren, und zwar in der Weise, daß am Videosignalausgang serielle Videodaten vorliegen, die sich als Überlagerungen der zugeführten Grafikdaten und der gefilterten Videodaten ergeben.

Die Erfindung sieht vor, daß der erste Speicher als schneller Cachespeicher ausgebildet ist und der zweite Speicher als Arbeitsspeicher in Form eines Random Access Memory.

Die dem Grafiksignaleingang zugeführten Grafikdaten können wiederum wie in der ersten Anordnung beispielsweise als Bitmaps von einem Mikroprozessor vorliegen.

Es ist vorgesehen, daß das Horizontalfilter, die beiden Speicher und die Überblend- und Filtereinheit mit einem Kontrollsystem verbunden sind, das geeignet ist, die Video- und Grafiksignalverarbeitung zu regeln. Das gesamte Videosignalverarbeitungssystem soll wiederum in Echtzeit betrieben werden, wobei die Taktfrequenz des Kontrollsystems wesentlich höher ist als die Taktfrequenz eines Signals am Videosignaleingang und/oder am Videosignalausgang.

Es ist vorgesehen, daß das Kontrollsystem mit einem Mikroprozessor verbunden ist oder durch ein Mikroprozessor ersetzt ist, der Teile des Programmablaufs oder den gesamten Programmablauf der digitalen Videosignalverarbeitung regelt.

In einer besonders vorteilhaften Ausgestaltung der Erfindung ist vorgesehen, daß die gesamte Konfiguration auch für eine Interlace-Progressiv-Wandlung verwendet wird. Diese wird für zukünftige Displays mit höherer Auflösung erforderlich. Prinzipiell wird dort genau dieselbe Einsparung von einem zusätzlichen Rechenwerk, welches direkt vor dem Vertikalfilter der ersten Anordnung anzuordnen und einem externen Speicher eintreffen. Die Speicherersparnis in diesem Fall ist sogar noch wesentlich größer, da für eine entsprechende Signalverarbeitung nach bisheriger Technik ein zusätzlicher Halbbild-Speicher benötigt wird. Dies bedeutet, daß beispielsweise bei der PAL-Norm 288 Zeilen in einem externen RAM zwischengespeichert werden müssen. Bei der beschriebenen zweiten Anordnung ist die Interlace-Progressiv-Wandlung mit dem gegebenen Rechenwerk und Speicher möglich.

Ausführungsbeispiele der Erfindung sind in der Zeichnung dargestellt und werden wie folgt näher beschrieben. Es zeigen:

Figur 1: Ein erstes Ausführungsbeispiel eines Videosignalverarbeitungssystems gemäß Anordnung 1.

Figur 2: Ein zweites Ausführungsbeispiel eines Videosignalverarbeitungssystems gemäß Anordnung 2.

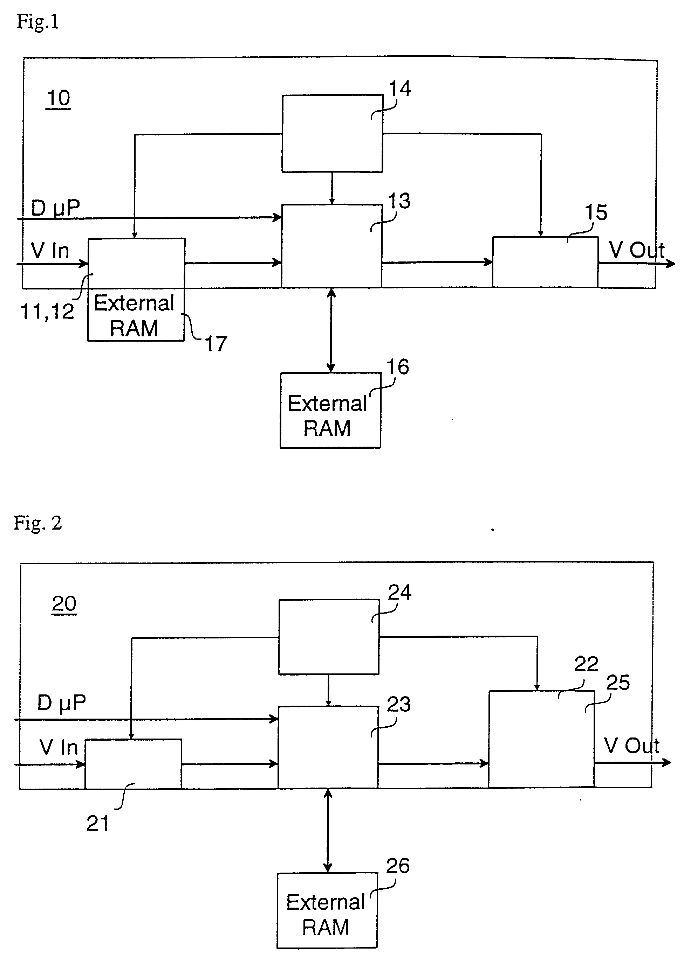

Die erste Anordnung nach Figur 1 weist einen Videosignaleingang V_{In}, einen Grafiksignaleingang D_{*µ*}_{P} und einen Videosignalausgang Vₒᵤₜ auf. Der Videosignaleingang V_{In} ist mit einer Filtereinheit verbunden, die einen Horizontalfilter 11 und einen Vertikalfilter 12 aufweist. Dieser Filtereinheit ist ein externer Speicher 17 zugeordnet. Dieser ist als Random Access Memory (RAM) ausgeführt. Die am Ausgang der Filtereinheit anliegenden Daten und die am Grafiksignaleingang D_{*µ*}_{P} anliegenden Daten werden einem Zwischenspeicher 13 zugeführt. Der Zwischenspeicher 13 ist mit einem weiteren externen Speicher 16 verbunden. Weiterhin ist der Zwischenspeicher 13 mit einer Überblendungseinheit 15 verbunden, welche wiederum mit dem Videosignalausgang V_{Out} verbunden ist. Die Filtereinheit, d.h. der Horizontalfilter 11 und der Vertikalfilter 12, sowie die Speicher 13,16 und 17 als auch die Überblendungseinheit 15 sind an ein Kontrollsystem 14 angeschlossen. Im Beispiel ist die Filtereinheit bestehend aus Horizontalfilter 11 und Vertikalfilter 12, sowie der Zwischenspeicher 13 (Cache), die Überblendungseinheit 15 und das Kontrollsystem 14 in einem programmierbaren Logikbaustein (beispielsweise einem FPGA) integriert.

Die digitalen Videodaten am Videosignaleingang V_{In} werden über das Horizontalfilter 11 und das Vertikalfilter 12 skaliert, d. h. in andere Größenverhältnisse umgerechnet, um eine Anpassung an das Display zu erreichen. Für die horizontale Filterung sind jeweils nur einige Bildpunkte (Pixel) aus der selben Zeile erforderlich. Da diese zeitlich direkt hintereinander folgen, ist nur ein Speicher für wenige Bildpunkte notwendig. Im Vertikalfilter 12 müssen jedoch die Bildpunkte mehrerer Zeilen (d. h. von mindestens zwei Zeilen) miteinander verrechnet werden. Dies bedeutet, daß die Informationen von mindestens einer Zeile in einem Speicher gepuffert werden müssen. Diese Pufferung erfordert eine Speichergröße von 720 Bildpunkten für das Leuchtdichtesignal und von je 360 Bildpunkten für jedes Farbdifferenzsignal. Demzufolge müssen 720 Bildpunkte+2x360 Bildpunkte, d. h. also 1440 Bildpunkte speicherbar sein.

Die Daten werden anschließend über einen Zwischenspeicher, d. h. zum Beispiel über einen Cache, in einen externen Speicher 16 (in der Regel ein externes RAM) geschrieben. Parallel dazu werden auch Grafikdaten (Bitmaps) beispielsweise von einem Mikroprozessor über den schnellen Zwischenspeicher 13 (Cache) in den externen Speicher 16 (RAM) geschrieben.

Diese Bilder werden in der Überblendungseinheit 15 (Layering-Block) miteinander kombiniert. Dies geschieht in der Weise, daß verschiedene Bilder über einen einstellbaren Faktor miteinander verrechnet werden. In der Fachsprache spricht man von Alpha-Blending. Dies führt zur Darstellung von transparenten Bildern.

Die Steuerung aller dieser Aufgaben übernimmt ein programmierbarer Logikbaustein 10. Dieser ist beispielsweise als Field Programmable Gate Array (FPGA) ausgeführt. Auch die Filter 11,12 und die Überblendungseinheit 15, sowie der Zwischenspeicher 13 befindet sich im FPGA. Lediglich die RAMs sind als externe Bausteine angeschlossen. Das ganze System wird in Echtzeit betrieben, wobei die Clock-Rate, d. h. die Taktrate, des Kontrollsystems 14 wesentlich höher sein muß, als die Clock-Rate des Ein- und Ausgangsignals.

Figur 2 zeigt ein weiteres Ausführungsbeispiel eines Videosignalverarbeitungssystems nach Anordnung 2. Dieses System ist so realisiert, daß gegenüber Anordnung 1 ein externer Speicher eingespart werden kann.

Das System nach Figur 2 besteht aus einem Grafiksignaleingang D_{*µ*}_{P}, einem Videosignaleingang V_{In} und einem Videosignalausgang V_{Out}. Der Videosignaleingang V_{In} ist mit einem Horizontalfilter 21 verbunden. Die am Ausgang des Horizontalfilters 21 anliegenden Videodaten, sowie die am Grafiksignaleingang D_{*µ*} _{P} anliegenden Grafikdaten werden einem Zwischenspeicher 23 zugeführt. Der Zwischenspeicher 23 ist wie in Figur 1 mit einem externen Speicher 26 verbunden. Weiterhin ist der Zwischenspeicher 23 mit einer Überblendungseinheit 25 und einem Vertikalfilter 22, welches als Überblend- und Filtereinheit in einem Block realisiert ist. Diese Überblend- und Filtereinheit wiederum ist mit dem Videosignalausgang V_{Out} verbunden. Alle Komponenten, d. h. der Horizontalfilter, der Zwischenspeicher 23, der externe Speicher 26 und die Überblend- und Filtereinheit 22 und 25, sind über Steuerleitungen mit einem Kontrollsystem 24 verbunden. Dieses Kontrollsystem 24, sowie alle weiteren Komponenten außer dem externen Speicher 26 sind in einem programmierbaren Logikbaustein 20 integriert. Dieser programmierbare Logikbaustein 20 ist im Beispiel wiederum als FPGA ausgeführt.

Bei diesem zweiten System wird das Vertikal-Filter 22 also nicht mehr am Eingang im Filterblock implementiert, sondern am Ausgang in der Überblendungseinheit 25 (Layering-Block) realisiert. Dadurch entfällt der zusätzliche externe Speicher 17 (in der Regel ein RAM) vom Filterblock, weil der vorhandene externe Speicher 26 (RAM) mitbenutzt werden kann.

Die Hardware der Überblendungseinheit 25 (Layering-Recheneinheit) ist mit dem der ersten Ausführungsform identisch. Lediglich die Kontrolleinheit 24 sorgt nun durch einen entsprechend geänderten Programmablauf für die richtige Errechnung der Ausgangsdaten. Die integrierte Nutzung der Überblendungseinheit 25 (Layering-Recheneinheit) zur vertikalen Filterung wird dynamisch über das Kontrollsystem 24 und/oder über externe Anforderungen eines Mikroprozessors gesteuert.

Ausgenutzt wird dabei die erhöhte Taktrate des Rechenwerkes gegenüber der Taktrate der Eingangs- und Ausgangsdaten. Dieser erlaubt auch ein entsprechend schnelles Lesen der verschiedenen zu verrechnenden Bilddaten aus dem externen Speicher 26 ohne deren Bandbreitenbereich zu verletzen. Im Vergleich zur ersten Ausführungsform wird zusätzlich das Rechenwerk für das Vertikalfilter 11 als auch der zusätzliche externe Speicher 17 eingespart.

Wird diese Konfiguration zur Interlace-Progressiv-Wandlung verwendet, so ist die Speicherersparnis noch wesentlich grösser. Bei der Interlace-Progessiv-Wandlung wird mit Hilfe des Vertikalfilters 22 aus zwei Halbbildern mit je 288 Zeilen ein Vollbild mit 576 Zeilen errechnet. In diesem Fall muß also die Möglichkeit gegeben sein, ein Halbbild, d. h. 288 Zeilen, zwischenzuspeichern. Nach Anordnung 1 muß dies sowohl im externen Speicher 17 als auch im externen Speicher 16 möglich sein. Verwendet man die Anordnung 2, so genügt die Pufferung im externen Speicher 26.

In dieser Anordnung 2 werden die dem Videosignaleingang V_{In} anliegenden Videodaten zunächst mit Hilfe des Horizontalfilters 21 in ein Videobild mit einer anderen Spaltenzahl umgerechnet, wobei etwa 5-6 Bildpunkte im externen Speicher 26 gepuffert werden müssen. Die umgerechneten Videodaten werden zusammen mit den über den Grafiksignaleingang D_{*µ*}_{P} zugeführten Grafikdaten über den Zwischenspeicher 23 in den externen Speicher 26 geschrieben. Da für eine Überlagerung zweier Bilder mit Hilfe der Überblendungseinheit 25 ohnehin die Videodaten eines kompletten Vollbilds (und die Grafikdaten) abgelegt werden müssen, ist es günstig, wenn sowohl die Überblendung, als auch die Vertikalfilterung in einem einzigen Block, der Überblend- und Filtereinrichtung 22,25 erfolgt.

### Bezugszeichenliste

- 10: programmierbarer Logikbaustein
- 11: Horizontalfilter
- 12: Vertikalfilter
- 13: Zwischenspeicher
- 14: Kontrollsystem
- 15: Überblendungseinheit
- 16, 17: externer Speicher

- 20: programmierbarer Logikbaustein
- 21: Horizontalfilter
- 22: Vertikalfilter
- 23: Zwischenspeicher
- 24: Kontrollsystem
- 25: Überblendungseinheit
- 26: externer Speicher

- V_{In}: Videosignaleingang
- V_{Out}: Videosignalausgang
- D_{*µ*}_{P}: Grafiksignaleingang

## Patentansprüche

1. Videosignalverarbeitungssystem zu einer Verarbeitung von Videodaten und Grafikdaten mit
a) einem Grafiksignaleingang D_{*µ*}_{P}, dem die Grafikdaten zugeführt werden,
b) einem Videosignaleingang (V_{In}), dem Videobilder mit einer vorgegebenen Anzahl von Spalten und einer vorgegebenen Anzahl von Zeilen in Form von seriellen Videodaten zugeführt werden,
c) mit einem Videosignalausgang (V_{Out}),
d) einer Filtereinheit, die mit dem Videosignaleingang (V_{In}) verbunden ist und die einen Horizontalfilter (11) und einen vertikalen Filter (12) aufweist, die geeignet sind, die über den Videosignaleingang (V_{In}) erhaltenen Videodaten in Videobilder mit anderer Spalten und/oder Zeilenzahl umzuwandeln und einen ersten Speicher (17), der geeignet ist, einzelne Bildpunkte und/oder Zeilen zu puffern,
e) einem zweiten Speicher (13), der mit dem Grafiksignaleingang (D_{*µ*}_{P}) und der Filtereinheit (11,12) verbunden ist, und der geeignet ist, die über den Grafiksignaleingang D_{*µ*}_{P} und über die Filtereinheit (11,12) zugeführten Daten zwischenzuspeichern,
f) einem dritten Speicher (16), der mit dem zweiten Speicher (13) verbunden ist und der geeignet ist, die über den zweiten Speicher (13) zugeführten Daten zu speichern,
g) einer Überblendungseinheit (15), die mit dem zweiten Speicher (13) und mit dem Videosignalausgang (V_{Out}) verbunden ist und die geeignet ist, die über den zweiten Speicher (13) zugeführten Grafikdaten und gefilterten Videodaten zu kombinieren, daß am Videosignalausgang (V_{Out}) serielle Videodaten vorliegen, die sich als Überlagerung der zugeführten Grafikdaten und der gefilterten Videodaten ergeben.

2. Videosignalverarbeitungssystem nach Anspruch 1, **dadurch gekennzeichnet**, daß der erste Speicher (17) als externes RAM ausgebildet ist.

3. Videosignalverarbeitungssystem nach einem der vorangegangenen Ansprüche, **dadurch gekennzeichnet,** daß der zweite Speicher (13) als Cache ausgebildet ist.

4. Videosignalverarbeitungssystem nach einem der vorangegangenen Ansprüche, **dadurch gekennzeichnet**, daß der dritte Speicher (16) als externes RAM ausgebildet ist.

5. Videosignalverarbeitungssystem nach einem der vorangegangenen Ansprüche, **dadurch gekennzeichnet,** daß die dem Grafiksignaleingang (V_{In}) zugeführten Grafikdaten, z. Bsp. Bitmaps, von einem Mikroprozessor sind.

6. Videosignalverarbeitungssystem nach einem der vorangegangenen Ansprüche, **dadurch gekennzeichnet,** daß die Filtereinheit (11, 12), die Speicher (17,13,16) und die Überblendungseinheit (15) mit einem ersten Kontrollsystem (14) verbunden sind, das geeignet ist, die Video- und Grafiksignalverarbeitung zu regeln.

7. Videosignalverarbeitungssystem nach einem der vorangegangenen Ansprüche, **dadurch gekennzeichnet,** daß das Videosignalverarbeitungssystemin in Echtzeit betrieben wird, wobei die Taktfrequenz des ersten Kontrollsystems (14) höher ist als die Taktfrequenz eines Signals am Videosignaleingang (V_{In}) und/oder am Videosignalausgang (V_{Out}).

8. Videosignalverarbeitungssystem nach einem der Ansprüche 6 oder 7, **dadurch gekennzeichnet,** daß das erste Kontrollsystem (14) ein Mikroprozessor ist.

9. Videosignalverarbeitungssystem zu einer Verarbeitung von Videodaten zu Grafikdaten mit
a) einem Grafiksignaleingang D_{*µ*}_{P} dem Grafikdaten zugeführt werden,
b) einem Videosignaleingang (V_{In}), dem Videobilder mit einer vorgegebenen Anzahl von Spalten und einer vorgegebenen Anzahl von Zeilen in Form von seriellen Videodaten zugeführt werden,
c) einem Videosignalausgang (V_{Out}),
d) einem Horizontalfilter (21), das mit dem Videosignaleingang (V_{In}) verbunden ist und das geeignet ist, die über den Videosignaleingang (V_{In}) erhaltenen Videodaten in Videobilder mit einer anderen Spaltenzahl umzuwandeln,
e) einem vierten Speicher (23), der mit dem Grafiksignaleingang (D_{*µ*}_{P}) und dem Horizontalfilter (21) verbunden ist, und der geeignet ist, die über den Grafiksignaleingang (D_{*µ*}_{P}) und den Horizontalfilter (21) zugeführten Daten zwischenzuspeichern,
f) einem fünften Speicher (26), der mit dem vierten Speicher (23) verbunden ist und er geeignet ist, die über den vierten Speicher (23) zugeführten Daten zu speichern,
g) einer Überblend- und Filtereinheit, die mit dem vierten Speicher (23) und mit dem Videosignalausgang (V_{Out}) verbunden ist, wobei die Überblend- und Filtereinheit einen Vertikal-filter (22) aufweist, der geeigent ist, die über den vierten Speicher (23) zugeführten Videodaten in Videobilder mit anderer Zeilenzahl umzuwandeln und eine Überblendungseinheit (25), die geeignet ist, die über den vierten Speicher (23) zugeführten Grafikdaten und die gefilterten Videodaten zu kombinieren, daß am Videosignalausgang (V_{Out}) serielle Videodaten vorliegen, die sich als Überlagerung der zugeführten Grafikdaten und der gefilterten Videodaten ergeben.

10. Videosignalverarbeitungssystem nach Anspruch 9, **dadurch gekennzeichnet,** daß der vierte Speicher (23) als Cache ausgebildet ist.

11. Videosignalverarbeitungssystem nach Anspruch 9 oder 10, **dadurch gekennzeichnet,** daß der fünfte Speicher (26) als RAM ausgebildet ist.

12. Videosignalverarbeitungssystem nach einem der Ansprüche 9 bis 11, **dadurch gekennzeichnet,** daß die dem Grafiksignalausgang (V_{Out}) zugeführten Grafikdaten, z. Bsp. Bitmaps, von einem Mikroprozessor sind.

13. Videosignalverarbeitungssystem nach einem der Ansprüche 9 bis 12, **dadurch gekennzeichnet,** daß der Horizontalfilter (21), der vierte und fünfte Speicher (23,26) und die Überblend- und Filtereinheit (22,25) mit einem zweiten Kontrollsystem (24) verbunden sind, das geeignet ist, die Video- und Grafiksignalverarbeitung zu regeln.

14. Videosignalverarbeitungssystem nach einem der Ansprüche 9 bis 13, **dadurch gekennzeichnet,** daß die Taktfrequenz des zweiten Kontrollsystems (24) höher ist als die Taktfrequenz eines Signals am Videosignaleingang (V_{In}) und/oder am Videosignalausgang (V_{Out}).

15. Videosignalverarbeitungssystem nach einem der Ansprüche 13 oder 14, **dadurch gekennzeichnet**, daß das zweite Kontrollsystem (24) ein Mikroprozessor ist.

16. Videosignalverarbeitungssystem nach einem der Ansprüche 9 bis 15, **dadurch gekennzeichnet,** daß das Videosignalverarbeitungssystem zur Interlace-Progressiv-Wandlung verwendet wird.

17. Videosignalverarbeitungsverfahren zu einer Verarbeitung von Videodaten und Grafikdaten, wobei
a) einem Grafiksignaleingang (D_{*µ*}_{P}) die Grafikdaten zugeführt werden,
b) einem Videosignaleingang (V_{In}) Videobilder mit einer vorgegebenen Anzahl von Spalten und einer vorgegebenen Anzahl von Zeilen in Form von seriellen Videodaten zugeführt werden,
c) an einem Videosignalausgang (V_{Out}) die verarbeiteten Videodaten und Grafikdaten wieder entnommen werden,
d) in einer Filtereinheit (11,12) die über den Videosignaleingang (V_{In}) zugeführten Daten in Videobilder mit anderer Spalten und/oder Zeilenzahl umgewandelt werden und einzelne Bildpunkte und/oder Zeilen in einem ersten Speicher (17) gepuffert werden,
e) in einem zweiten Speicher (13) die über den Grafiksignaleingang (V_{In}) zugeführten Grafikdaten und die von der Filtereinheit (11,12) umgewandelten Videodaten gepuffert werden,
f) in einem dritten Speicher (16) die über den zweiten Speicher (13) zugeführten Daten gespeichert werden,
g) in einer Überblendungseinheit (15) die über den zweiten Speicher (13) zugeführten Grafikdaten und gefilterten Videodaten kombiniert werden, daß am Videosignalausgang (V_{Out}) serielle Videodaten vorliegen, die sich als Überlagerung der zugeführten Grafikdaten und der gefilterten Videodaten ergeben.

18. Videosignalverarbeitungsverfahren zu einer Verarbeitung von Videodaten und Grafikdaten, wobei
a) einem Grafiksignaleingang D_{*µ*}_{P} die Grafikdaten zugeführt werden,
b) einem Videosignaleingang (V_{In}) Videobilder mit einer vorgegebenen Anzahl von Spalten und einer vorgegebene Anzahl von Zeilen in Form von seriellen Videodaten zugeführt werden,
c) an einem Videosignalausgang (V_{Out}) die verarbeiteten Videodaten und Grafikdaten wieder entnommen werden,
d) in einem Horizontalfilter (21) die über den Videosignaleingang (V_{In}) zugeführten Videodaten in Videobilder mit einer anderen Spaltenzahl umgewandelt werden,
e) in einem vierten Speicher (23) die über den Grafiksignaleingang (V_{In}) und den Horizontalfilter (21) zugeführten Daten zwischengespeichert werden,
f) in einem fünften Speicher (26) die über den vierten Speicher (23) zugeführten Daten gespeichert werden,
g) in einer Überblend- und Filtereinheit (22,25), die über den vierten Speicher (23) zugeführten Videodaten in Videobilder mit anderer Zeilenzahl umgewandelt werden und die über den vierten Speicher (23) zugeführten Grafikdaten und die gefilterten Videodaten derart kombiniert werden, daß am Videosignalausgang (V_{Out}) serielle Videodaten vorliegen, die sich als Überlagerung der zugeführten Grafikdaten und der gefilterten Videodaten ergeben.
